Europäisches Patentamt

European Patent Office

Office européen des brevets

(11) Numéro de publication: **0 015 236**
**B1**

(12) **FASCICULE DE BREVET EUROPEEN**

(45) Date de publication du fascicule du brevet: 29.05.85

(21) Numéro de dépôt: 80810043.2

(22) Date de dépôt: 04.02.80

(51) Int. Cl.⁴: **C 04 B 28/24, C 09 J 1/02, C 09 D 1/02, C 09 K 17/00**

(54) Composition de liant adhésif, incombustible à base de silicate alcalin, procédé pour sa fabrication et application.

(30) Priorité: 02.02.79 CH 1152/79

(43) Date de publication de la demande:
03.09.80 Bulletin 80/18

(45) Mention de la délivrance du brevet:
29.05.85 Bulletin 85/22

(84) Etats contractants désignés:
BE DE GB IT LU NL

(56) Documents cités:
FR-A-2 290 536
FR-A-2 378 076

(73) Titulaire: **Société de Diffusion de Recherches Techniques et Financières S.A.**
**Avenue du Château de la Cour 4**
**CH-3960 Sierre (CH)**

(72) Inventeur: **Margerie, Gilbert Charles**
**Rue Fondary 17**
**F-75015 Paris (FR)**

(74) Mandataire: **Nithardt, Roland**
**WALTER FR MOSER PATENT SERVICE SA 76, rue de Lausanne**
**CH-1202 Genève (CH)**

Courier Press, Leamington Spa, England.

# Description

La présente invention est relative à une composition de liant adhésive, incombustible et insensible à l'eau.

Cette composition est utilisable avec des matériaux trés divers et, de ce fait, constitue l'élément de base pour la fabrication des produits suivants:

— Produits d'imprégnation destinés à la stabilisation des sols et des sables pulvérulents, au durcissement des flocages d'amiante et de fibres de roches et à la protection des bois contre les insectes, les rongeurs et les cryptogames.

— Colles résistant à de très hautes températures (+ de 1.000° C) pour l'assemblage de tous matériaux, à l'exception de certaines matières plastiques.

— Peintures anticorrosives, pare-feu, décoratives.

— Enduits isolants thermiques, acoustiques, pare-feu.

— Plaques et panneaux pare-feu, insensibles à la chaleur, armés ou non, pouvant être moulés en forme ou bien à plat.

— Blocs de toutes formes et de toutes dimensions, plus spécialement destinés à l'industrie du bâtiment.

— Eléments de formes diverses, auxquels peuvent être incorporées des résistances électriques chauffantes.

On connaît un nombre important de procédés utilisant le durcissement des silicates alcalins pour obtenir un liant aux applications diverses.

Les procédés employés pour obtenir ce durcissement peuvent être classés en deux catégories:

1) Durcissement et insensibilité à l'eau obtenus par une forte élévation de température (200°C et plus). C'est le cas du brevet français 2.136.862, qui utilise la cuisson des silicates alcalins pour assurer la liaison entre des granulats minéraux expansés. C'est aussi le cas pour le brevet japonais 76.99.125.

2) Durcissement et insensibilité à l'eau, obtenus par réaction chimique. C'est le cas du brevet tchèque 147.594 qui utilise la réaction acide de la chaux et du ciment sur les silicates alcalins et des brevets japonais 73.14.729 et 76.91.935, qui utilisant la réaction du fluor (fluosilicates) sur les silicates alcalins. La même réaction est utilisée dans le brevet soviétique mentionné dans 'Chemical abstracts"—Vol. 83—1975—page 314. C'est aussi le cas pour le brevet français 2.295.103, qui utilise, pour obtenir cette réaction, des oxydes métalliques, de l'hydroxyde d'aluminium, ou du sulfate de baryum.

Les deux procédés décritis ci-dessus sont connus de très longue date, aussi bien en ce que concerne la cuisson à haute température que la réaction chimique en présence d'acides.

En 1841, Mr. Kuhlmann, a démontré qu'en aspergeant de silicate de potasse des roches acides, tendres et poreuses, on pouvait les rendre trés dures, nongélives et insensibles à l'eau. Il a lui-même fabriqué des peintures en incorporant aux silicates alcalins des oxydes métalliques.

Depuis le commencement du vingtième siècle jusqu'en 1940, de nombreuses sociétés ont fabriqué des peintures à base de silicates alcalins avec des oxydes métalliques; ce furent, par exemple: Ransonne en Angleterre, Kaulback en Allemagne, Silexore en France.

La demande de brevet français 2.378.076 décrit une composition adhésive composée, en deux emballages distincts, d'un constituant aqueux et d'un constituant particulaire sec comprenant un réactif de prise et d'insolubilisation et une charge particulaire. On y mentionne que 2 à 4% de plastifiant pouvaient être ajoutées au constituant aqueux.

La composition du liant selon l'invention comprend un premier composant sous forme liquide, un second sous forme poudreuse, séparés dans des emballages différents qui assurent dans chacun de ceux-ci une conservation sans limite de temps. Elle est caractérisée par le fait que ses deux composants sont plastifiés, le premier composant qui represente entre 30 et 85% du poids total de liant étant constitué de silicate et d'au moins un adjutant plastifiant liquide representant 2 à 20% en poids de ce premier composant, et le second comprenant de 5 à 15% par rapport au poids de silicate d'une charge plastifiante constituée par un ou plusieurs des produits suivants: caséine, amidon, carboxyméthylcellulose, la teneur en silicate étant comprise entre 24 et 83% du poids total du liant.

Des variantes de la présente invention ont trait à l'utilisation de dispersions de résines acryliques ou d'émulsions anioniques de bitume en mélange avec les silicates alcalins.

Le brevet déposé par "Koppers Company Inc." aux Etats-Unis d'Amérique, sous le No. 3.297.616, décrit, pour un traitement de surfaces métalliques, l'utilisation, en mélange avec des silicates alcalins, de dispersion aqueuses de résines acryliques.

La modification de silicates alcalines par des résines acryliques, des résols ou des émulsions anioniques de bitume est également évoquée dans la demande de brevet français 2.378.076. Mais le film superficial formé par la résine empêche que se fasse la réaction en présence du $CO^2$ de l'atmosphère, car les résines acryliques sont difficilement perméables au gaz carbonique. De plus, sans l'adjonction de solvants aromatiques (qui n'est pas prévue dans ce brevet), la polymérisation des résines est difficile dans ce mélange. Des variantes du procédé de l'invention prévoient l'apport de solvant aromatiques avec les résines acryliques ou les émulsions anioniques de bitume, ce qui permet une bonne polymérisation et un gonflement de ces dernières.

Le premier composant est un liant minéral en solution aqueuse, plastifié, qui est constitué par un silicate de sodium, de potassium ou de lithium, ou le mélange de deux ou trois de ces silicates suivant l'utilisation, auquel il est ajouté, de préférence de 2 à 15%, par rapport au poids de silicate, d'un plastifiant tel que la glycérine, ou une dérivé du glycol comme l'éthylèneglycol ou autres, ceci pour limiter le retrait lors de la prise et abaisser le température limite inférieure d'emploi (4° au lieu de 8°C).

La plastification de ces silicates alcalins peut avantageusement être modifiée par l'apport de résines acryliques en dispersion; ainsi, par exemple, la résine acrylique connue sous le nom commercial "Acronal" 290.D fabriquée par la fime "Rhone-Poulenc", par l'apport d'émulsions anioniques de bitume, par des siliconates, par des huiles végétales, par exemple l'huile de lin. La proportion globale de ces plastifiants dans le mélange varie selon la qualité du produit recherché; elle est de 2 à 20% selon les cas.

Dans le cas d'un revêtement mince (peinture ou enduction), il est préférable d'utiliser une grande proportion de plastifiant, de 15 à 20% par exemple.

Ces plastifiants peuvent être utilisés seuls ou en mélange. Dans le cas d'utilisation de résine acrylique comme plastifiant, il est recommandé de prémélanger vingt-quatre heures à l'avance les résines avec un solvant aromatique, comme le toluène ou le benzène, dans une proportion de 3 à 5' du poids de résine; ceci, afin de permettre une bonne polymérisation des résines dans le mélange et d'abaisser la température de filmification des résines, de 20° C à 8°C. L'addition dans le mélange résine/toluène de 1 à 5%, de préférence de 1 à 2% d'ammoniaque permet avant mélange avec les silicates alcalins d'éviter la formation de grumaux.

Avec les émulsions anioniques de bitume, il sera de même préférable de prémélanger avec 3 à 5% d'un solvant aromatique, toluène ou benzène, avant mélange avec les silicates alcalins.

Avec les huiles végétales, il sera avantageux de prémélanger l'huile avec 3 à 5% d'essence térébenthine.

L'incorporation de siliconates (silicones en phase aqueuse) dans les silicates pourra se faire sans précaution particulière; la proportion de siliconates dans les silicates sera fonction du but recherché; ainsi une proportion de 15% dans un enduit rendra celui-ci totalement hydrofuge, donc thermiquement plus isolant. La présence de siliconates n'est pas indispensable par exemple dans une enduction pour stabilisation de sables.

Le mélange des plastifiants avec les silicates alcalins se fera avantageusement à l'aide d'un mélangeur à palettes ou à ailettes tournant à environ 800 à 1.000 tours/minute.

Les silicates alcalins choisis seront de préférence ceux dont le rapport silice/sodium ou potassium ou lithium est supérieur à 3. Les silicates de ce type, disponibles dans le commerce, ont un rapport pondéral situé entre 3,5 et 3,75. Le silicate de sodium sera généralement préféré en raison de son prix; néanmoins, les métaux seront de préférence toujours couverts d'un primaire à base de silicates de potassium.

Le premier composant ainsi défini entre pour une proportion de 30 à 85% du poids total du produit fini, selon les applications.

Le deuxième composant est à l'état sec, parfaitement mélangé et finement broyé; il comprend:

A—Des réactifs de prise, qui entrent pour 2 à 30% du poids des silicates, selon le mode d'application décrit plus loin. Ces réactifs de prise sont de deux sortes, qui doivent être utilisées séparément, selon le but et le mode d'application recherchés:

1) Des réactifs de prise lente, utilisés pour les colles, les peintures, les enduits. Ce sont des fluosilicates de zinc, de sodium, de calcium, de magnésium ou de baryum. La proportion de ces réactifs lents ne devra pas dépasser 15%, de préférence 10% du poids des silicates. Une bonne proportion moyenne sera de 5 à 7%.

2) Des réactifs de prise rapide, utilisés pour les enductions, certains enduits projetés (projection séparée à deux sorties), les blocs, panneaux et plaques.

Pour ces réactifs à prise rapide, il s'agit de: chlorures de calcium, de sodium, de potassium, de magnésium ou d'ammonium; des acides tels l'acide borique en poudre; dus sulfates de zinc, de cuivre, d'ammonium, de baryum; des phosphates de calcium, d'ammonium, de sodium, de potassium. La proportion de ces réactifs rapides se situera avantageusement entre 5 et 25% du poids des silicates. Une bonne proportion sera de 10 à 20%.

B—Des charges actives. Ces charges ont pour but de favoriser la carbonatation du mélange et la transformation de $CO_2$ en $CO_3Ca$ en combinaison avec l'air.

La proportion de ces charges actives dans le mélange sera, selon les applications, de 1 à 55%, de préférence de 1 à 25% du poids des silicates alcalins; ce sont par exemple:

1) des argiles comme la bentonite et le kaolin;

2) des carbonates, comme le carbonate de chaux;

3) des bicarbonates de chaux, de sodium, de potassium ou d'ammonium;

4) du silicate de magnésium ou du talc;

5) des oxydes métalliques, tels que: oxyde de zinc, de baryum, de plomb, de titane, de fer ou de cuivre.

Ces charges actives pourront être utilisées seules ou en mélange. Il faut noter que, dans le cas des bicarbonates, la proportion dans le mélange ne pourra pas dépasser 5%.

C—Des charges plastifiantes, qui assument un rôle mécanique dans le mélange, rendant le liant moins cassant après séchage et permettant dans le cas des peintures et enduits fabriqués selon le procédé de l'invention, d'éviter la fissuration et le faïencage. Ces charges plastifiantes sont:

1) la caséine;

2) l'amidon;

3) la carboxyméthylcellulose.

La proportion de ces charges plastifiantes sera fonction des qualités recherchées pour le produit; à titre d'exemple, une bonne proportion pour la fabrication d'un peinture sera de 5 à 15% du poids des silicates. Il faudra tenir compte du fait que la carboxyméthylcellulose ayant un pouvoir gonflant et une reprise d'eau plus élevée, son utilisation comme plastifiant sera de préférence limitée à une proportion se situant entre 5 et 10% maximum du poids des silicates. La souplesse du film ainsi réalisée apre6s application varie en fonction de cette proportion. Les trois plastifiants décrits ci-dessus peuvent être utilisés seuls ou en mélange. Ces charges plastifiantes ont en outre l'avantage d'augmenter le pouvoir adhésif du mélange.

D—Desharges neutres; celles-ci assument un rôle secondaire d'armature du mélange et confèrent une certain dureté à celui-ci. Ce sont:

1) des fibrettes, dont la longueur peut varier entre 0,5 et 10 mm, d'origines diverses: fibres de roche, de verre, fibres synthétiques diverses, végétales et animales. Leur rôle est de renforcer la résistance à la traction et d'éviter les fissurations.

2) des poudres de silice, verre, quartz, finement broyées. Leur rôle est d'augmenter la dureté du mélange ainsi que la résistance à l'abrasion.

Selon le résultat wz le produit final recherchés, la proportion des charges neutres dans le mélange sera de 2 à 10 % par rapport au poids des silicates.

E—Des charges constituantes dont l'apport est déterminé par le type de produit que l'on veut fabriquer à partir du liant.

Ces charges constituantes peuvent être de deux sortes:

1) Des charges incombustibles, d'origine minérale. Ce sont, par exemple: la perlite expansée, le mica expansé, l'argile expansée, les diatomées, le verre expansé, la pouzzolane et la pierre ponce; le charges ci-dessus décrites seront utilisées pour obtenir des produits isolants et pare-feu. Ce sont par ailleurs, des sables et gravillons, des roches diverses broyées; ces dernières charges seront utilisées pour la constitution de bétons.

2) Des charges combustibles, telles les sciures de bois, les déchets de pailles, de lin, de sisal, de coco, de roseaux, de canne à sucre, de chiffons; ces charges, utilisées avec le liant, absorbent les silicates en phase aqueuse; de ce fait, en présence de hautes températures (600 à 1.000°C), la transformation de la cellulose se fait par pyrolyse et donne des cokes; le produit ainsi obtenu est dont ininflammable.

L'application du lidant selon l'invention, peut se faire selon trois procédés distincts, dictés par la proportion et le choix des réactifs (A) de prise. Ces trois procédés d'application sont les suivantes:

A) Premier procédé d'application:

Les deux composants sont mélangés avant l'application, manuellement ou à l'aide d'un mélangeur à palettes ou à hélice. Dans ce cas, la proportion totale des réactifs de prise ne devra pas dépasser 10% du poids des silicates. Une bonne proportion sera de 5%; la "vie en pot" du produit ainsi obtenu étant de 45 minutes. Le produit, peinture, enduit ou pâte à mouler, pourra être appliqué à la brosse, au rouleau ou au pistolet (pour les peintures et les enduits); une pâte pourra être coulée directement dans le moule.

B) Deuxième procédé d'application:

La proportion des réactifs de prise dans le deuxième composant se situe entre 5 et 25%; dans ce cas, la prise extrêmement rapide des composants ne permet pas le mélange préalable.

On utilisera alors un matériel de projection permettant de projeter les deux composants séparément et simultanément. Ce procédé sera utilisé pour des enduits ou pour le remplissage de moules; dans ce dernier cas, le démoulage pourra intervenir très rapidement.

C) Troisième procédé d'application:

La proportion des réactifs de prise sera aussi élevée que dans le cas précédent; les deux composants seront alors additionnés d'eau, soit 80% d'eau dans le premier composant, et 90% dans le deuxième composant (dans lequel n'entrent alors que les réactifs de prise qui sont solubles). Ils sont alors projetés séparément en commençant, soir par le premier composant, soit par le deuxième composant. Il est important de laisser au moins partiellement sécher le composant appliqué en premier, ceci afin d'éviter (surtout dans le cas de supports absorbants) le colmatage superficiel dû à la présence d'une grande quantité d'eau. Ce type d'application sera utilisé pour la stabilisation des sables, sols, flocages d'amiante et fibres de roche, ainsi que pour l'impregnation des bois et toutes matières pulvérulentes. L'imprégnation pourra être effectuée par trempage ou par pulvérisation.

A titre d'exemple, on donnera ci-après quelques formules de liant adapté aux procédés d'applications ci-dessus.

Formule d'un enduit à destination isolante:

Premier composant:

| | |
|---|---|
| Silicate de sodium | 500 g |
| Silicate de potassium | 500 g |
| Glycérine | 50 g |
| Ethylèneglycol | 50 g |
| Siliconate | 20 g |

Deuxième composant:

| | |
|---|---|
| Fluosilicate de zinc | 150 g |
| Talc | 50 g |
| Mica expansé | 200 g |
| Fibrettes de roche | 100 g |
| Carbonate de calcium | 30 g |
| Bentonite | 100 g |
| Bicarbonate de sodium | 20 g |
| Carboxyméthylcellulose | 50 g |
| Perlite expansée | 180 g |

Le produit formulé ci-dessus sera projeté dans une machine du type de celles utilisées pour la projection des flocages.

Formules d'une peinture pour métaux:

Premier composant:

| | |
|---|---|
| Silicate de potassium | 1.000 g |
| Glycérine | 50 g |
| Huile de lin (diluée à 5% d'essence térébenthine) | 100 g |
| Siliconate | 50 g |

Deuxième composant:

| | |
|---|---|
| Oxyde de zinc | 200 g |
| Fluosicilate de zinc | 50 g |
| Bentonite | 150 g |
| Carbonate de calcium | 100 g |
| Talc | 100 g |
| Caséine | 75 g |
| Carboxyméthylcellulose | 75 g |
| Silice broyée | 50 g |

Cette dernière formule permet la préparation d'une peinture qui pourra être appliquée, soit au pinceau, soit au rouleau, soit au pistolet, sur des supports métalliques. Elle servira de primaire avant la projection d'un enduit pare-feu tel que celui décrit auparavant.

Formule d'un enduit isolant:

Premier composant:

| | |
|---|---|
| Silicate de sodium | 1.000 g |
| Ethylèneglycol | 50 g |
| Résine acrylique avec solvant aromatique | 51,5 g |
| Siliconate | 3,5 g |

Deuxième composant:

| | |
|---|---|
| Bentonite | 100 g |
| Carbonate de calcium | 50 g |
| Perlite expansée | 150 g |
| Carboxyméthylcellulose | 50 g |
| Fluosilicate de sodium | 100 g |
| Fibrettes de roche | 50 g |

Un tel enduit, prémélangé, pourra être appliqué soit à la machine, soit à la main, son temps de "vie en pot" sera d'une heure environ.

Formule d'une colle pour panneaux de particules:

Premier composant:

| | |
|---|---|
| Silicate de sodium | 500 g |
| Silicate de potassium | 500 g |
| Glycérine | 50 g |
| Résine acrylique avec solvant aromatique (2,5 grs) et ammoniaque (2,5 grs) | 55 g |

Deuxième composant:

| | |
|---|---|
| Bentonite | 150 g |
| Carbonate de calcium | 50 g |
| Talc | 150 g |
| Carboxyméthylcellulose | 80 g |
| Fluosilicate de zinc | 50 g |
| Caséine | 20 g |
| Amidon | 20 g |

Les deux composants d'une telle colle sont mélangés jusqu'à obtention d'une pâte onctueuse qui pourra être employée pendant une heure environ.

**Revendications**

1. Composition de liant adhésif, incombustible et insensible à l'eau, se présentant sous forme de deux composants séparés, dont le premier comprend au moins un silicate alcalin en solution aqueuse et dont le second, à l'état sec en poudre, comprend au moins un réactif de prise permettant la formation d'un gel de silice, caractérisée par le fait que les deux composants sont plastifiés, le premier composant qui représente entre 30 et 85% du poids total de liant, étant constitué de silicate et d'au moins un adjuvant plastifiant liquide représentant 2 à 20% en poids de ce premier composant, et le second composant comprenant de 5 à 15% par rapport au poids de silicate d'une charge plastifiante constituée par un ou plusieurs des produits suivants: caseine, amidon, carboxyméthylcellulose, la teneur en silicate étant comprise entre 24 et 83% du poids total du liant.

2. Composition selon la revendication 1, caractérisée en ce que ledit adjuvant comprend de la glycérine et/ou un dérivé du glycol et constitue de 2 à 15% du poids de silicate alcalin.

3. Composition selon la revendication 2, caractérisée en ce que ledit adjuvant est de l'éthyléneglycol.

4. Composition selon la revendication 1, caractérisée en ce que ledit adjuvant comprend une émulsion anionique de bitume additionnée d'un solvant aromatique constituant de 3 à 5% du poids de l'émulsion.

5. Composition selon l'une des revendications 1 à 4, caractérisée en ce que ledit adjuvant comprend, en outre, au moins une résine acrylique en dispersion, avec addition d'un solvant aromatique constituant de 3 à 5% du poids de résine acrylique et d'ammoniaque constituant de 1 à 5% du poids de la résine acrylique.

6. Composition selon l'une des revendications 1 à 5, caractérisée en ce que ledit adjuvant comprend en outre une huile vététale, mélangée à 3 à 5% de son poids d'essence térébenthine.

7. Composition selon l'une des revendications 1 à 6, caractérisée en ce que ledit adjuvant comprend en outre des siliconates.

8. Composition selon la revendication 1, dans laquelle les silicates alcalins sont choisis dans le groupe silicate de sodium, silicate de potassium et silicate de lithium, caractérisée en ce que le rapport pondéral silice/sodium ou potassium ou lithium est supérieur à 3.

9. Composition selon l'une des revendcations 1 à 8, caractérisée en ce que le réactif de prise comprend un ou plusiers des produits suivants: fluosilicate de zinc, de sodium, de calcium, de magnésium ou de baryum; chlorure de calcium, de sodium, de potasssium, de magnésium ou d'ammonium; acide borique en poudre; sulfate de zinc, de cuivre, d'ammonium ou de baryum; phosphate de calcium, d'ammonium, de sodium ou de potassium.

10. Procédé de fabrication d'un liant de composition conforme à l'une des revendications 1 à 9, caractérisé par le fait que les deux composants sont mélangés avant l'utilisation, la proportion de réactif de prise ne dépassant pas 10% du poids de silicate.

11. Procédé de fabrication d'un liant de composition conforme à l'une des revendications 1 à 9, caractérisé par le fait que les deux composants sont projetés séparément et simultanément, la proportion de réactif de prise étant comprise entre 5 et 25% du poids de silicate.

12. Procédé de fabrication d'un liant de composition conforme à l'une des revendications 1 à 9, caractérisé par le fait que les deux composants sont projetés séparément l'un après l'autre, la proportion de réactif de prise étant comprise entre 5 et 25% du poids de silicate.

**Patentansprüche**

1. Zusammensetzung eines unbrennbaren und wasserunempfindlichen Bindemittels, das aus zwei getrennten Bestandteilen besteht, wobei der erste Bestandteil mindestens ein alkalisches Silikat in wässriger Lösung enthält, und wobei der zweite Bestandteil in Form eines trokenen Pulvers mindestens ein Härtungsreagent enthält, das die Bilding eines Kieselgels ermöglicht, dadurch gekennzeichnet, dass jeder dieser zwei Bestandteile einen Weichmacher enthält, wobei der erste Bestandteil, der zwischen 30 und 85 Gew.-% des Gesamtgewichtes des Bindemittels darstellt, aus Silikat und aus mindestens einem flüssigen, zwischen 2 und 20 Gew.-% des Gewichtes dieses ersten Bestandteils darstellenden Weichmacher besteht, und wobei der zweite Bestandteil einen von 5 bis 15 Gew.-% des Silikatgewichtes darstellenden Weichmacher enthält, der aus einem oder mehreren der folgenden Produkte besteht: Kasein, Stärke, Carboxymethylzellulose, wobei der Silikatgehalt zwischen 24 und 83 Gew.-% des Gesamtgewichtes des Bindemittels liegt.

2. Zusammensetzung gemäss Anspruch 1, dadurch gekennzeichnet, dass der flüssige Weichmacher Glycerol und/oder ein Glycolderivat enthält und 2 bis 15 Gew.-% des Gewichtes des alkalischen Silikates darstellt.

3. Zusammensetzung gemäss Anspruch 2, dadurch gekennzeichnet, dass der flüssige Weichmacher Aethylenglycol ist.

4. Zusammensetzung gemäss Anspruch 1, dadurch gekennzeichnet, dass der flüssige Weichmacher eine anionische Bitumenemulsion enthält mit Zugabe eines aromatischen Lösungsmittels, das 3 bis 5 Gew.-% des Emulsionsgewichtes darstellt.

5. Zusammensetzung gemäss einen der Ansprüche 1 bis 4, dadurch gekennzeichnet, dass der flüssige Weichmacher ausserdem mindestens ein dispergiertes Acrylharz enthält mit Zugabe eines aromatischen, 3 bis 5 Gew.-% des Acrylharzgewichtes darstellenden Lösungsmittels sowie von Ammoniak, das 1 bis 5 Gew.-% des Acrylharzgewichtes darstellt.

6. Zusammensetzung gemäss einen der Ansprüche 1 bis 5, dadurch gekennzeichnet, dass des flüssige Weichmacher ausserdem ein Pflanzenöl enthält, das mit Terpentinöl in einer Menge von 3 bis 5 Gew.-% seines Gewichtes gemischt ist.

7. Zusammensetzung gemäss einen der Ansprüche 1 bis 6, dadurch gekennzeichnet, dass der flüssige Weichmacher ausserdem Silikonate enthält.

8. Zusammensetzung gemäss Anspruch 1, wobei die alkalinischen Silikate in der Gruppe der Natrium-, Kalium- und Lithiumsilikate ausgewählt werden, dadurch gekennzeichnet, dass die Gewichtsbeziehung Kieselerde/Natrium oder Kalium oder Lithium den Wert 3 übersteigt.

9. Zusammensetzung gemäss einen der Ansprüche 1 bis 8, dadurch gekennzeichnet, dass der flüssige Weichmacher ein oder mehrere der folgenden Chemikalien enthält: Zink-, Natrium-, Kalzium-, Magnesium- oder Baryumfluosilikat; Kalzium-, Natrium-, Kalium, Magnesium- oder Ammoniumchlorid; Borsäure in Pulverzustand; Zink-, Kupfer-, Ammonium- oder Baryumsulfat; Kalzium-, Ammonium-, Natrium- oder Kaliumphosphat.

10. Herstellungsverfahren eines gemäss einen der Ansprüche 1 bis 9 zusammengesetzten Bindemittels, dadurch gekennzeichnet, dass die zwei Bestandteile vor ihrer Verwendung zusammen gemischt werden, wobei der Gehalt an Härtungsreagent nicht 10 Gew.-% des Silikatgewichtes übersteigt.

11. Herstellungsverfahren eines gemäss einen der Ansprüche 1 bis 9 zusammengesetzten Bindemittels, dadurch gekennzeichnet, dass die zwei Bestandteile getrennt und gleichzeitig ausgeworfen werden, wobei der Gehalt an Härtungsreagent zwischen 5 und 25 Gew.-% des Silikatgewichtes liegt.

12. Herstellungsverfahren eine gemäss einen der Ansprüche 1 bis 9 zusammengesetzten Bindemittels, dadurch gekennzeichnet, dass die zwei Bestandteile getrennt und einer nach dem anderen ausgeworfen werden, wobei der Gehalt an Härtungsreagent zwischen 5 und 25 Gew.-% des Silikatgewichtes liegt.

**Claims**

1. An adhesive, incombustible and waterproof binder composition comprising two distinct parts, the first part comprising at least one alkaline silicate in aqueous solution and the second part, in the dry powder state, comprising at least one setting reagent which allows to form a silica gel, said composition being characterized by the fact that the two parts are plasticized, the first part, the weight of which represents between 30 and 85% of the whole weight of the binder, being constituted of silicate and of at least one liquid plasticizing agent which represents 2 to 20% by weight of said whole first part, and the second part comprising from 5 to 15% by weight, in respect of the weight of the silicate, of a plasticizer constituted by one or more of the following products: casein, starch, carboxymethylcellulose, the amount of silicate being comprised between 24 and 83% by weight of the whole binder.

2. The composition according to claim 1, wherein said liquid plasticizing agent comprises glycerin and/or a glycol derivative and constitutes from 2 to 15% by weight of the alkaline silicate.

3. The composition according to claim 2, wherein said liquid plasticizing agent is ethylene glycol.

4. The composition according to claim 1, wherein said liquid plasticizing agent comprises an amonic bituminous emulsion with an aromatic solvent constituting 3 to 5% by weight of said emulsion.

5. The composition according to one of the claims 1 to 4, wherein said liquid plasticizing agent comprises moreover at least one acrylic resin in a dispersion with an aromatic solvent constituting 3 to 5% by weight of the acrylic resin and with ammonia constituting 1 to 5% by weight of the acrylic resin.

6. The composition according to one of the claims 1 to 5, wherein said liquid plasticizing agent comprises moreover at least one vegetable oil which is mixed with 3 to 5% of its weight of turpentine oil.

7. The composition according to one of the claims 1 to 6, wherein said liquid plasticizing agent comprises moreover siliconates.

8. The composition according to claim 1, wherein the alkaline silicates are chosen in the group of sodium silicate, potassium silicate and lithium silicate, said composition being characterized by the fact that the weight ratio silica/sodium or potassium or lithium is higher than 3.

9. The composition according to one of the claims 1 to 8, wherein the setting reagent comprises one or more of the following products: fluosilicate of zinc, of sodium, of calcium, of magnesium or of baryum; calcium-, sodium-, potassium-, magnesium- or ammonium chloride; powdered boric acid; zinc-, copper-, ammonium- or baryum-sulphate; calcium-, ammoinum-, sodium- or potassium-phosphate.

10. Method of fabrication for a binder with a composition according to one of the claims 1 to 9, wherein both parts are mixed before use, the amount of setting reagent remaining below 10% of the weight of silicate.

11. Method of fabrication for a binder with a composition according to one of the claims 1 to 9, wherein both parts are projected separately and simultaneously, the amount of setting agent being comprised between 5 and 25% of the weight of silica.

12. Method of fabrication for a binder with a composition according to one of the claims 1 to 9, wherein both parts are projected separately and one after the other, the amount of setting agent being comprised between 5 and 25% of the weight of silica.

8